# EUROPEAN PATENT APPLICATION

(11) **EP 4 803 063 A1**
(43) Date of publication of application: **09.09.2026**
(21) Application number: 24897553.4
(22) Date of filing: 26.11.2024
(51) Int. Cl.: A61J 1/20, A61J 1/10, G01N 1/00

(54) **COLLECTION KIT**

(30) Priority: 28.11.2023 JP 2023200661
(71) Applicant: Terumo Kabushiki Kaisha, Tokyo 151-0072 (JP)
(72) Inventor: KATAGIRI, Mayu, Fujinomiya-shi, Shizuoka 418-0004 (JP)
(74) Representative: TBK
(86) International application number: PCT/JP2024/041858
(87) International publication number: WO 2025/115869

(57) **Abstract**

A collection kit (10A) includes an inflow tube (12) and a collection bag (14A). The collection bag (14A) includes a plurality of housing chambers (a first housing chamber (26) and a second housing chamber (28)), a connection channel (30) connecting the plurality of housing chambers, an exhaust unit (40) disposed in a wall portion (48) forming at least one housing chamber out of the plurality of housing chambers, and a plurality of outflow ports (a first outflow port (15) and a second outflow port (17)) connected to the plurality of housing chambers, respectively.

## Description

### Technical Field

The present invention relates to a collection kit for transferring a collection target (mainly, a liquid medicine) housed in a medical bag to a plurality of sampling containers.

### Background Art

Blood preparations include a red blood cell preparation, a plasma preparation, a platelet preparation, and a whole blood preparation. In order to ensure safety of the blood preparations, a small amount of sample may be collected to perform a culture test. In the culture test, a sample is collected in a culture bottle (sampling container), and the culture bottle is placed in an environment suitable for bacterial growth to detect the presence or absence of a pathogen.

Hereinafter, a work procedure of transferring a platelet preparation from a platelet bag to two culture bottles will be described using a medical bag (hereinafter, referred to as a platelet bag) in which a platelet preparation is housed as an example.

A small volume collection bag is connected to the platelet bag, and a part of the platelet preparation of the platelet bag is transferred to the collection bag. Thereafter, the collection bag is disconnected from the platelet bag. Next, in a clean bench, the collection bag is connected to a tube extending from a sample collection tube, and a prescribed amount of the platelet preparation is transferred from the collection bag to the sample collection tube with reference to a scale of the sample collection tube. Thereafter, two culture bottles are sequentially connected to the sample collection tube, and a prescribed amount of the platelet preparation is transferred to the two culture bottles. One of the two culture bottles is a culture bottle subjected to anaerobic culture, and the other is a culture bottle subjected to aerobic culture.

For example, US Patent No. 8777921 discloses a collection kit for collecting a sample from a medical bag.

### Citation List

### Patent Literature

Patent Literature 1: US Patent No. 8777921

### Summary of Invention

From the viewpoint of further improving the safety of blood preparations, culture tests for all blood preparations have been studied. Therefore, it is required to improve work efficiency of the culture test of the blood preparations. In a case of performing the culture test on all the blood preparations, it is desirable that an instrument for separating the blood preparation into culture bottles can be reduced in cost with a simple structure. It is desirable that a predetermined amount of the collection target can be collected in each of the plurality of sampling containers.

It is therefore an object of the present invention to solve the above-described problems.
(1) One aspect of the present invention is a collection kit for collecting a collection target housed in a medical bag into a plurality of sampling containers, the collection kit including an inflow tube to which the medical bag is connected, and a collection bag connected downstream of the inflow tube, the collection bag formed by stacking and welding two flexible sheets, the collection bag including a plurality of housing chambers that houses the collection target, a connection channel that connects the plurality of housing chambers to each other, an exhaust unit disposed in a wall portion forming at least one housing chamber out of the plurality of housing chambers for discharging air inside the plurality of housing chambers to an outside of the collection bag, and a plurality of outflow ports connected to the plurality of housing chambers, respectively, that transfers the collection target from the plurality of housing chambers to the plurality of sampling containers, respectively.
   Since the collection bag has a structure integrally formed using the two flexible sheets, the collection kit can be manufactured at a low cost. Since the collection bag includes a plurality of housing chambers and can accumulate a predetermined amount (required amount) in the plurality of housing chambers, a predetermined amount of the collection target can be collected in each of the plurality of sampling containers. Since the exhaust unit is provided in the wall portion forming the collection bag, the structure of the collection kit can be simplified as compared with the configuration in which the exhaust unit is provided in a tube protruding from the collection bag.
(2) In the collection kit according to (1) described above, the collection bag may include a first end to which the inflow tube is connected, and a second end opposite to the first end and provided with the plurality of outflow ports, the collection kit is configured to be used in a posture in which the second end is below the first end, and the exhaust unit may be disposed in an upper portion of the wall portion.
   With this configuration, since the collection target is accumulated from a lower portion in the housing chamber, air can be efficiently discharged from the inside of the housing chamber by providing the exhaust unit in the upper portion of the wall portion forming the housing chamber.
(3) In the collection kit according to (1) or (2) described above, the exhaust unit may include a hydrophilic filter.
   Since the hydrophilic filter allows passage of gas before being wetted with liquid and blocks passage of gas and liquid after being wetted with liquid, this is suitable as a member that discharges air from the housing chamber.
(4) The collection kit according to any one of (1) to (3) described above may include a plurality of adapters connected downstream of the plurality of outflow ports, and connectable to the plurality of sampling containers, respectively.
   Since the collection kit includes a plurality of adapters in an initial state, it is possible to save time and effort to connect the plurality of adapters when using the collection kit, and to efficiently perform collection work.
(5) In the collection kit according to any one of (1) to (4) described above, the plurality of housing chambers may include a first housing chamber and a second housing chamber, the collection bag may include an inflow channel that connects the inflow tube and the first housing chamber, an upstream end of the connection channel may be connected to the first housing chamber, a downstream end of the connection channel may be connected to the second housing chamber, and the exhaust unit may be provided in a wall portion forming the second housing chamber.
   With this configuration, since the air inside the first housing chamber moves to the second housing chamber via the connection channel and is discharged from the exhaust unit, a place where the exhaust unit is disposed may be only the second housing chamber out of the first housing chamber and the second housing chamber.
(6) In the collection kit according to any one of (1) to (4) described above, the plurality of housing chambers may include a first housing chamber and a second housing chamber, the collection bag may include a common channel connected downstream of the inflow tube, the connection channel may include a first branch path branched from the common channel to communicate with the first housing chamber, and a second branch path branched from the common channel to communicate with the second housing chamber, and the exhaust unit may include a first exhaust unit disposed in a wall portion forming the first housing chamber and a second exhaust unit disposed in a wall portion forming the second housing chamber.

With this configuration, the collection target flows into the first housing chamber and the second housing chamber via the first branch path and the second branch path, respectively, and the air inside the first housing chamber and the second housing chamber is discharged from the first exhaust unit and the second exhaust unit, respectively, so that the air can be efficiently discharged from the inside of the first housing chamber and the second housing chamber.

According to the collection kit of the present invention, since the collection bag has a structure integrally formed using two flexible sheets, the collection kit can be manufactured at a low cost. Since the collection bag includes a plurality of housing chambers and can accumulate a predetermined amount (required amount) in the plurality of housing chambers, a predetermined amount of the collection target can be collected in each of the plurality of sampling containers. Since the exhaust unit is provided in the wall portion forming the collection bag, the structure of the collection kit can be simplified as compared with the configuration in which the exhaust unit is provided in a tube protruding from the collection bag.

### Brief Description of Drawings

[Fig. 1] Fig. 1 is an overall diagram of a collection kit according to a first embodiment of the present invention.
[Fig. 2] Fig. 2 is an explanatory diagram of a structure of an exhaust unit.
[Fig. 3] Fig. 3 is a diagram of a state in which a collection target is collected in the collection kit according to the first embodiment of the present invention.
[Fig. 4] Fig. 4 is a diagram of a state in which the collection kit according to the first embodiment of the present invention is connected to a culture bottle.
[Fig. 5] Fig. 5 is an overall diagram of a collection kit according to a second embodiment of the present invention.
[Fig. 6] Fig. 6 is a diagram of a state in which a collection target is collected in the collection kit according to the second embodiment of the present invention.
[Fig. 7] Fig. 7 is a diagram of a state in which the collection kit according to the second embodiment of the present invention is connected to a culture bottle.

### Description of Embodiments

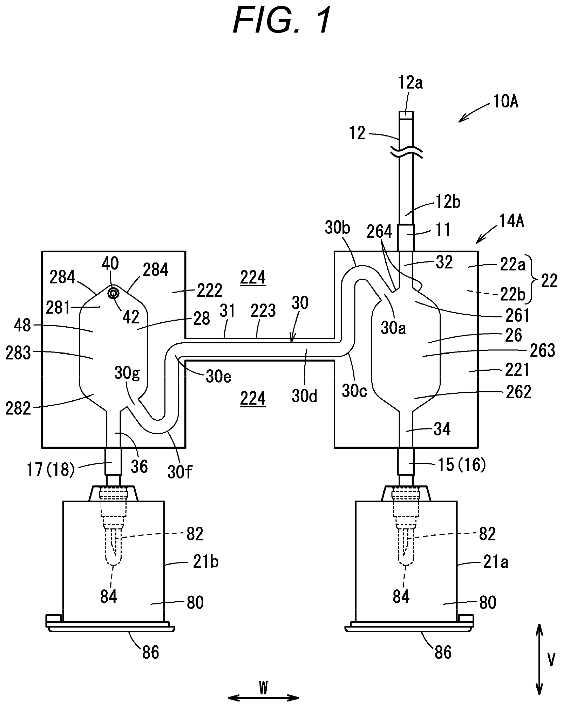

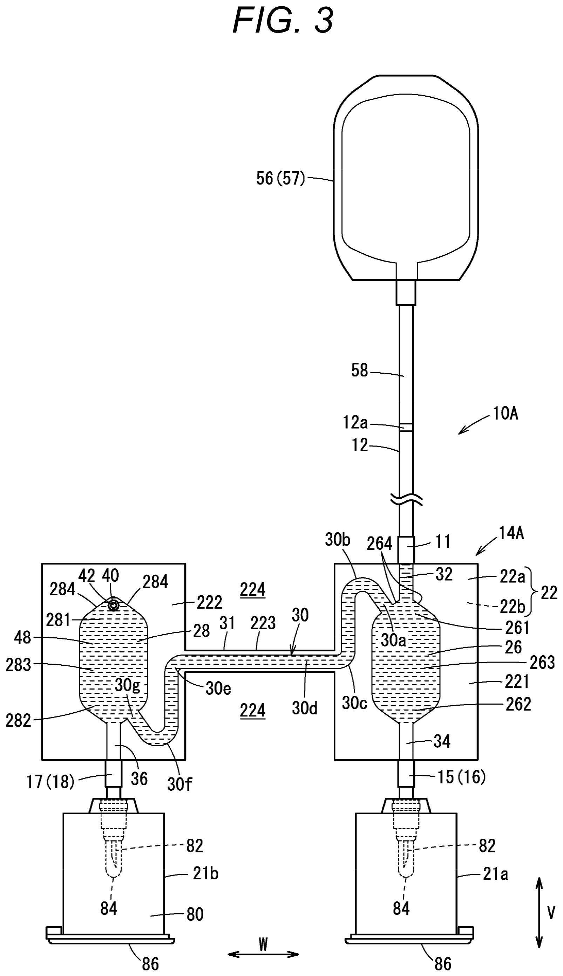

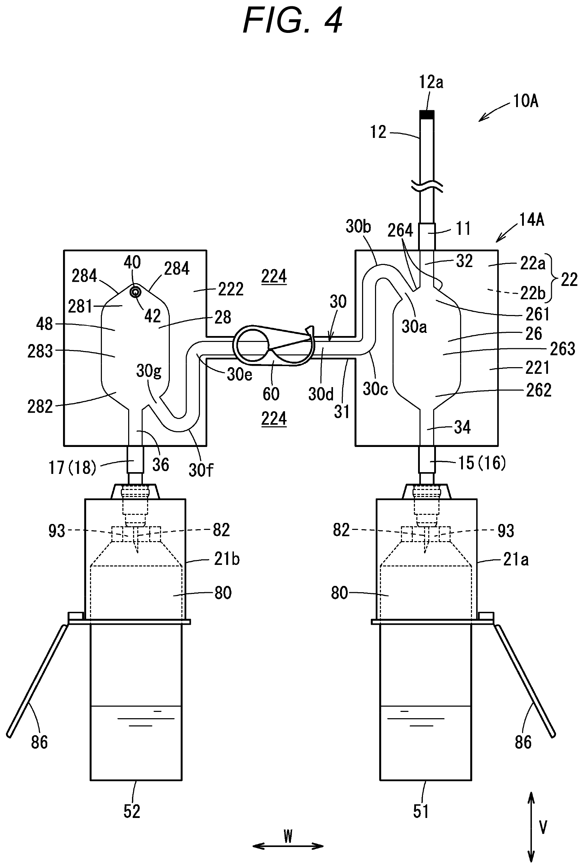

A collection kit 10A according to the present embodiment illustrated in Figs. 1, 3, and 4 is used for transferring a blood preparation, which is a collection target, to sampling containers 51 and 52 (refer to Fig. 4). The collection target is, for example, a blood preparation such as a platelet preparation. The collection target may be a medicine other than the blood preparation. The collection target may be a liquid sample other than the medicine. A medical bag 56 (Fig. 3) may be a blood bag system for centrifugally separating blood containing a plurality of components into a plurality of components (for example, three components including a light specific gravity component, a medium specific gravity component, and a heavy specific gravity component, or two components including a light specific gravity component and a heavy specific gravity component) having different specific gravities, and separately housing and storing respective components in different bags. In this case, the collection kit 10A may be connected to the blood bag system. The collection kit 10A is typically used in a posture in which an up-down direction in Figs. 1, 3, and 4 is in a vertical direction. Therefore, in the following description, in the collection kit 10A, the up-down direction (V direction) in Figs. 1, 3, and 4 is also referred to as the "up-down direction", and a right-left direction (W direction) in Figs. 1, 3, and 4 is also referred to as a "width direction".

The collection kit 10A is used, for example, in a culture test for confirming the safety of the blood preparation at a business place such as a blood center where the blood preparation is manufactured. In this case, the sampling containers 51 and 52 are culture bottles.

In the culture test, a test for anaerobic bacteria culture and a test for aerobic bacteria culture are performed. Therefore, in the culture test, two bottles including the sampling container 51 (hereinafter, also referred to as a "first sampling container 51") for anaerobic culture and the sampling container 52 (hereinafter, also referred to as a "second sampling container 52") for aerobic culture are used. The collection kit 10A is used for collecting a liquid sample (platelet preparation) and dispensing the same into the two sampling containers 51 and 52 by predetermined amounts.

Hereinafter, in the present embodiment, an example of using the platelet preparation as the blood preparation will be described, but the blood preparation collected by the collection kit 10A may be a red blood cell preparation, a plasma preparation, or a whole blood preparation.

The collection kit 10A includes an inflow tube 12, an inflow port 11, a collection bag 14A, a plurality of outflow ports (a first outflow port 15 and a second outflow port 17), and a plurality of adapters (a first adapter 21a and a second adapter 21b).

The inflow tube 12 is, for example, a translucent medical tube made of a thermoplastic resin such as a vinyl chloride resin. The inflow tube 12 can be connected to or separated from another medical tube without exposing the inside thereof to outside air, for example, by an aseptic joining device, a tube sealer, or the like. The inflow tube 12 includes a first end 12a on an upstream side and a second end 12b on a downstream side. The first end 12a is welded to be sealed in an initial state. The second end 12b is connected to an upper end of the collection bag 14A via the inflow port 11.

The collection bag 14A includes two flexible sheets 22a and 22b stacked in a thickness direction. The two flexible sheets 22a and 22b are welded to be joined to each other in a plurality of welding portions. The collection bag 14A includes an inflow channel 32, a plurality of housing chambers, a connection channel 30, and a plurality of outflow channels. The inflow channel 32, the plurality of housing chambers, the connection channel 30, and the plurality of outflow channels are defined by the welding portions. The plurality of housing chambers includes a first housing chamber 26 and a second housing chamber 28. The plurality of outflow channels includes a first outflow channel 34 and a second outflow channel 36. The collection bag 14A may include three or more housing chambers and three or more outflow channels.

In an initial state of the collection kit 10A, the inflow channel 32, the first housing chamber 26, the second housing chamber 28, the connection channel 30, the first outflow channel 34, and the second outflow channel 36 swell in the thickness direction of the collection bag 14A. Therefore, the two flexible sheets 22a and 22b are separated from each other in the thickness direction in each portion of the inflow channel 32, the first housing chamber 26, the second housing chamber 28, the connection channel 30, the first outflow channel 34, and the second outflow channel 36. Note that, the thickness direction of the collection bag 14A is a direction orthogonal to the up-down direction (V direction) and the width direction (W direction).

A sheet portion 22 including the two flexible sheets 22a and 22b includes a first region 221 for forming the first housing chamber 26, a second region 222 for forming the second housing chamber 28, and a connection region 223 connecting the first region 221 and the second region 222. The first region 221 has a rectangular shape having the same dimension as that of the second region 222 as seen in the thickness direction of the collection bag 14A.

The connection region 223 extends in the width direction to integrally connect the first region 221 and the second region 222. The sheet portion 22 includes a pair of cutouts 224 obtained by cutting out the sheet portion 22 in a rectangular shape on an upper side and a lower side of the connection region 223. The connection region 223 is formed between the upper and lower cutouts 224. Although not particularly limited, the connection region 223 is located at the center of the first region 221 and the second region 222 in the up-down direction.

The inflow channel 32 connects the inflow tube 12 and the first housing chamber 26. The inflow channel 32 is connected to an upper end of the first housing chamber 26 of the collection bag 14A.

The first housing chamber 26 is formed in the first region 221 of the sheet portion 22. The first housing chamber 26 is a housing region for temporarily accumulating the platelet preparation in order to transfer the platelet preparation to the first sampling container 51. In the initial state of the collection kit 10A, the first housing chamber 26 swells in the thickness direction of the collection bag 14A, and air exists in the first housing chamber 26. In the first housing chamber 26, one flexible sheet 22a and the other flexible sheet 22b are separated from each other in the thickness direction. The first housing chamber 26 has a volume for housing a predetermined amount (for example, about 8 mL to about 10 mL) of the platelet preparation.

The first housing chamber 26 includes an upper portion 261, a lower portion 262, and an intermediate portion 263. Hereinafter, the upper portion 261, the lower portion 262, and the intermediate portion 263 of the first housing chamber 26 are also referred to as a "first upper portion 261", a "first lower portion 262", and a "first intermediate portion 263", respectively. The first upper portion 261 has a substantially triangular shape a width of which gradually decreases upward. Therefore, the first upper portion 261 includes a pair of oblique sides 264 inclined with respect to the width direction of the collection bag 14A. The inflow channel 32 is connected to an upper end of the first upper portion 261. The first lower portion 262 has a substantially triangular shape a width of which gradually decreases downward. The first intermediate portion 263 is located between the first upper portion 261 and the first lower portion 262, and has a constant width in the up-down direction.

The first outflow channel 34 is connected to a lower end of the first housing chamber 26 (a lower end of the first lower portion 262). The first outflow channel 34 extends downward from the lower end of the first housing chamber 26. The first outflow channel 34 is a channel for transferring the collection target toward the first sampling container 51.

The second housing chamber 28 is formed in the second region 222 of the sheet portion 22. The second housing chamber 28 is a housing region for temporarily accumulating the platelet preparation in order to transfer the platelet preparation to the second sampling container 52. In the initial state of the collection kit 10A, the second housing chamber 28 swells in the thickness direction of the collection bag 14A, and air exists in the second housing chamber 28. In the second housing chamber 28, one flexible sheet 22a and the other flexible sheet 22b are separated from each other in the thickness direction. The second housing chamber 28 has the same shape as that of the first housing chamber 26 and has a volume for housing a predetermined amount (for example, about 8 mL to about 10 mL) of the platelet preparation, the same amount as that of the first housing chamber 26. Note that, the volume of the first housing chamber 26 and the volume of the second housing chamber 28 may be different from each other.

The second housing chamber 28 includes an upper portion 281, a lower portion 282, and an intermediate portion 283. Hereinafter, the upper portion 281, the lower portion 282, and the intermediate portion 283 of the second housing chamber 28 are also referred to as a "second upper portion 281", a "second lower portion 282", and a "second intermediate portion 283", respectively. The second upper portion 281 has a substantially triangular shape a width of which gradually decreases upward. Therefore, the second upper portion 281 includes a pair of oblique sides 284 inclined with respect to the width direction of the collection bag 14A. The second lower portion 282 has a substantially triangular shape a width of which gradually decreases downward. The second intermediate portion 283 is located between the second upper portion 281 and the second lower portion 282, and has a constant width in the up-down direction.

The second outflow channel 36 is connected to a lower end of the second housing chamber 28. The second outflow channel 36 extends downward from the lower end of the second housing chamber 28. The second outflow channel 36 is a channel for transferring the collection target toward the second sampling container 52.

The connection channel 30 is a channel that connects the first housing chamber 26 and the second housing chamber 28. An upstream end 30a of the connection channel 30 is connected to the upper portion 261 of the first housing chamber 26. The connection channel 30 extends obliquely upward from the upstream end 30a, is curved in a top portion 30b, and extends downward. The connection channel 30 extends downward to the center in the up-down direction of the collection bag 14A on a downstream side of the top portion 30b, and is bent in the width direction in a bent portion 30c. The connection channel 30 forms an intermediate portion 30d extending in the width direction in a direction away from the first housing chamber 26 on a downstream side of the bent portion 30c.

The intermediate portion 30d of the connection channel 30 extends along the connection region 223 of the sheet portion 22 and is connected to the second region 222. The connection channel 30 includes a bent portion 30e on a downstream side of the intermediate portion 30d. The connection channel 30 is bent downward in the bent portion 30e. The connection channel 30 changes its direction in a folded portion 30f on a downstream side of the bent portion 30e. A downstream end 30g of the connection channel 30 is located downstream of the folded portion 30f and connected to the lower portion 282 of the second housing chamber 28.

The collection bag 14A further includes an exhaust unit 40 for discharging the air inside the first housing chamber 26 and the second housing chamber 28 to the outside of the collection bag 14A. In the present embodiment, the exhaust unit 40 is disposed in a wall portion 48 forming the second housing chamber 28. The wall portion 48 is a part of one flexible sheet 22a. The exhaust unit 40 is disposed in the wall portion 48 forming the second upper portion 281 of the second housing chamber 28 out of the flexible sheet 22a. More specifically, the exhaust unit 40 is disposed in the vicinity of an upper end of the second upper portion 281 (a position adjacent to the upper end of the second upper portion 281).

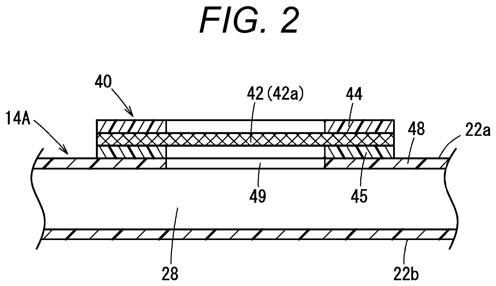

As illustrated in Fig. 2, the exhaust unit 40 includes a filter 42 and annular frame members 44 and 45 that sandwich the filter 42 from both sides. An opening 49 is provided in the wall portion 48 of the flexible sheet 22a, and the exhaust unit 40 is disposed so as to overlap the opening 49. Therefore, the filter 42 faces the opening 49. The exhaust unit 40 is joined (bonded or welded) to the wall portion 48.

The filter 42 has a function of allowing passage of gas and blocking passage of liquid. In the present embodiment, the filter 42 is a hydrophilic filter 42a. The hydrophilic filter 42a allows passage of gas before being wetted with liquid and blocks passage of gas after being wetted with liquid. As the second housing chamber 28 is filled with the collection target, when the hydrophilic filter 42a comes into contact with the collection target, pores of the hydrophilic filter 42a are closed by liquid forming the collection target, and thereafter, the exhaust unit 40 blocks the passage of gas and liquid.

In Fig. 1, the first outflow port 15 is connected to the first outflow channel 34. The first outflow port 15 is a channel member for transferring the collection target from the first housing chamber 26 toward the first sampling container 51 (refer to Fig. 4). The first adapter 21a is connected to the first outflow port 15. The first outflow port 15 protrudes from the collection bag 14A.

The first outflow port 15 functions as a first sealing member 16. The first sealing member 16 seals the first outflow channel 34 in an initial state to block the passage of fluid between the first housing chamber 26 and the first adapter 21a. The first sealing member 16 is a cylindrical member including a breakable plug therein, and when an operation of bending the plug is performed in the initial state, the plug is broken, and an inner channel can be opened.

The second outflow port 17 is connected to the second outflow channel 36. The second outflow port 17 is a channel member for transferring the collection target from the second housing chamber 28 toward the second sampling container 52 (refer to Fig. 4). The second adapter 21b is connected to the second outflow port 17. The second outflow port 17 protrudes from the collection bag 14A.

The second outflow port 17 functions as a second sealing member 18. The second sealing member 18 also is a member similar to the first sealing member 16, and seals the second outflow channel 36 in an initial state to block the passage of fluid between the second housing chamber 28 and the second adapter 21b.

The first adapter 21a includes a housing cylinder 80 capable of housing a neck portion of the first sampling container 51, a tubular needle portion 82 disposed inside the housing cylinder 80, and a rubber cover 84 covering the needle portion 82. The housing cylinder 80 includes a lid 86 that can be opened and closed. A release sheet may be adopted in place of the lid 86.

The needle portion 82 can puncture a rubber stopper 93 (refer to Fig. 4) of the first sampling container 51. When the needle portion 82 of the first adapter 21a penetrates the rubber stopper 93 of the first sampling container 51 and the first sealing member 16 is opened, the first sampling container 51 and the first housing chamber 26 communicate with each other. When the needle portion 82 punctures the rubber stopper 93 of the first sampling container 51, the rubber cover 84 is pushed toward a proximal end side, and the needle portion 82 penetrates the rubber cover 84. When the needle portion 82 comes out of the rubber stopper 93 of the first sampling container 51, the rubber cover 84 extends by its elastic restoring force to cover the needle portion 82 again.

The second adapter 21b has the configuration similar to that of the first adapter 21a. When the needle portion 82 of the second adapter 21b penetrates the rubber stopper 93 of the second sampling container 52 and the second sealing member 18 is opened, the second sampling container 52 and the second housing chamber 28 communicate with each other.

Note that, in a case where the collection bag 14A includes three or more housing chambers, the collection kit 10A includes three or more outflow ports and three or more adapters corresponding to the respective housing chambers.

In the initial state of the collection kit 10A, the collection kit 10A is not required to be provided with the first adapter 21a and the second adapter 21b. In this case, when the collection kit 10A is used, the first adapter 21a and the second adapter 21b are connected to the collection kit 10A. For example, the first adapter 21a includes an engagement claw and a connection needle, and a lower portion of the first outflow port 15 includes an engagement groove and a rubber stopper. The connection needle punctures the rubber stopper, and the engagement claw engages with the engagement groove, so that the first adapter 21a and the first outflow port 15 are connected. The second adapter 21b has a connection structure similar to that of the first adapter 21a.

The collection kit 10A configured as described above is used as follows. In the first embodiment, a collection method of dispensing the platelet preparation into the two sampling containers 51 and 52 (refer to Fig. 4) using the collection kit 10A will be described taking a case where the collection target is the platelet preparation as an example.

As illustrated in Fig. 3, a platelet bag 57, which is an aspect of the medical bag 56 containing the collection target, is joined to the collection kit 10A. The platelet bag 57 includes a tube 58 for connection. The tube 58 is joined to the inflow tube 12. The tube 58 is joined to the inflow tube 12 without coming into contact with outside air using the aseptic joining device.

Next, the platelet preparation is introduced into the collection bag 14A. At this step, the platelet bag 57 is disposed above the collection bag 14A. The first sealing member 16 and the second sealing member 18 of the collection kit 10A are maintained in a closed state.

The platelet preparation flows out of the platelet bag 57 by gravity and flows into the collection bag 14A via the inflow tube 12. The platelet preparation flowing into the collection bag 14A flows into the first housing chamber 26 via the inflow channel 32. The platelet preparation is accumulated in the first housing chamber 26, and a liquid level of the platelet preparation in the first housing chamber 26 rises. The air inside the first housing chamber 26 is pushed out by the platelet preparation and is discharged from the exhaust unit 40 via the connection channel 30 and the second housing chamber 28.

When the first housing chamber 26 is filled with the platelet preparation, the platelet preparation flows into the upstream end 30a of the connection channel 30. Thereafter, the platelet preparation flows through the connection channel 30 from upstream to downstream, and flows into the second housing chamber 28 from the lower portion 282 of the second housing chamber 28. As the platelet preparation continuously flows into the second housing chamber 28, a liquid level of the platelet preparation inside the second housing chamber 28 rises. The air in the second housing chamber 28 is discharged from the exhaust unit 40.

When the second housing chamber 28 is filled with the platelet preparation and the filter 42 of the exhaust unit 40 comes into contact with the platelet preparation to wet the filter 42, the exhaust unit 40 is closed, and the inflow of the platelet preparation into the second housing chamber 28 is stopped. As a result, the introduction of the platelet preparation into the collection bag 14A is completed. A predetermined amount (for example, about 8 mL to 10 mL) of the platelet preparation is housed in each of the first housing chamber 26 and the second housing chamber 28.

Thereafter, the platelet bag 57 is separated from the inflow tube 12 by a tube sealer (high-frequency sealer or ultrasonic sealer) or the like. The tube sealer separates the inflow tube 12 from the tube 58 of the platelet bag 57, and at the same time, seals the first end 12a of the inflow tube 12 by welding. The inflow tube 12 and the tube 58 are separated from each other without exposing inner channels to outside air. The separated platelet bag 57 is stored until a culture test is completed, and then used.

In contrast, the collection kit 10A filled with the platelet preparation is carried into a clean bench. Next, as illustrated in Fig. 4, an operation for transferring the platelet preparation from the collection kit 10A to the first sampling container 51 and the second sampling container 52 (connecting step, closing step, and opening step) is performed.

At the connecting step, the first sampling container 51 is connected to the first adapter 21a, and the second sampling container 52 is connected to the second adapter 21b. The needle portion 82 of the first adapter 21a penetrates the rubber stopper 93 of the first sampling container 51, and the needle portion 82 of the second adapter 21b penetrates the rubber stopper 93 of the second sampling container 52.

At the closing step, a tubular portion 31 of the connection channel 30 is closed by a pinchcock 60. As the tubular portion 31 is closed, fluid is blocked from moving between the first housing chamber 26 and the second housing chamber 28.

Note that, either the connecting step or the closing step may be performed first. The tubular portion 31 may be closed while being cut by the tube sealer. The tubular portion 31 may be closed by a method of welding the two flexible sheets 22a and 22b at the location of the tubular portion 31 by ultrasonic sealing or high-frequency sealing. In this case, it is not necessary to provide the pinchcock 60 in a circuit in advance.

Thereafter, when the opening operation of the first sealing member 16 is performed at the opening step, the platelet preparation in the first housing chamber 26 is sucked by a negative pressure of the first sampling container 51 and flows into the first sampling container 51 via the first outflow channel 34 and the first outflow port 15 (first sealing member 16). As a result, a predetermined amount of the platelet preparation is introduced into the first sampling container 51. When the opening operation of the second sealing member 18 is performed at the opening step, the platelet preparation in the second housing chamber 28 is sucked by a negative pressure of the second sampling container 52 and flows into the second sampling container 52 via the second outflow channel 36 and the second outflow port 17 (second sealing member 18). As a result, a predetermined amount of the platelet preparation is introduced into the second sampling container 52.

As a result, substantially the entire amount of the platelet preparation accumulated in the first housing chamber 26 is transferred to the first sampling container 51, and substantially the entire amount of the platelet preparation accumulated in the second housing chamber 28 is transferred to the second sampling container 52.

Through the above steps, the collection of the collection target (platelet preparation) using the collection kit 10A is completed.

Note that, when collecting the collection target using the collection kit 10A, a jig (collection kit jig) for connecting the collection kit 10A to the first sampling container 51 and the second sampling container 52 may be used. The collection kit jig includes, for example, a kit holding unit that holds the collection kit 10A, a lifting mechanism that displaces the kit holding unit in the up-down direction, and a bottle holding unit that holds the first sampling container 51 and the second sampling container 52. The collection kit 10A can be connected to the first sampling container 51 and the second sampling container 52 by lowering the kit holding unit that holds the collection kit 10A. In place of the lifting mechanism that displaces the kit holding unit in the up-down direction, a lifting mechanism that lifts the bottle holding unit up and down may be provided.

The first embodiment has the following effects.

The collection kit 10A has a structure in which the collection bag 14A is integrally formed using the two flexible sheets 22a and 22b, so that this can be manufactured at a low cost. The number of times of joining and separation between the tubes can be minimized, so that work efficiency is excellent. Furthermore, since it is not necessary to perform work of measuring and taking the collection target with eye according to a scale line, work becomes easy and a measurement error can be reduced.

The collection kit 10A can reliably separate the first housing chamber 26 and the second housing chamber 28 by closing the tubular portion 31 of the collection bag 14A with an appropriate closing unit (pinchcock 60 or welding), and can prevent the collection target from moving between the first housing chamber 26 and the second housing chamber 28. Therefore, the collection kit 10A can suppress a variation in amount of the collection target introduced into each of the first sampling container 51 and the second sampling container 52.

Since the exhaust unit 40 is provided in the wall portion 48 (a part of the flexible sheet 22a) forming the collection bag 14A, the structure of the collection kit 10A can be simplified as compared with the configuration in which the exhaust unit 40 is provided in the tube protruding from the collection bag 14A. That is, the collection kit 10A is not provided with an exhaust tube extending from the collection bag 14A.

The exhaust unit 40 is disposed in an upper portion of the wall portion 48. With this configuration, since the collection target is accumulated from the lower portion 282 of the second housing chamber 28 in the second housing chamber 28, the air can be efficiently discharged from the inside of the second housing chamber 28.

The exhaust unit 40 includes the hydrophilic filter 42a. The hydrophilic filter 42a allows passage of gas before being wetted with liquid and blocks passage of gas after being wetted with liquid, so that this is suitable as a member that discharges the air from the first housing chamber 26 and the second housing chamber 28.

Since the collection kit 10A includes the plurality of adapters (the first adapter 21a and the second adapter 21b) in the initial state, it is not necessary to perform an operation of connecting the plurality of adapters to the collection kit 10A when using the collection kit 10A, and collection work can be efficiently performed.

The connection channel 30 connects the upper portion 261 of the first housing chamber 26 and the lower portion 282 of the second housing chamber 28, and the exhaust unit 40 is provided in the wall portion 48 forming the second housing chamber 28. With this configuration, the air inside the first housing chamber 26 moves to the second housing chamber 28 via the connection channel 30 and is discharged from the exhaust unit 40. Therefore, it is sufficient that the exhaust unit 40 is only disposed in the second housing chamber 28 out of the first housing chamber 26 and the second housing chamber 28. That is, only one exhaust unit 40 is provided in the collection kit 10A.

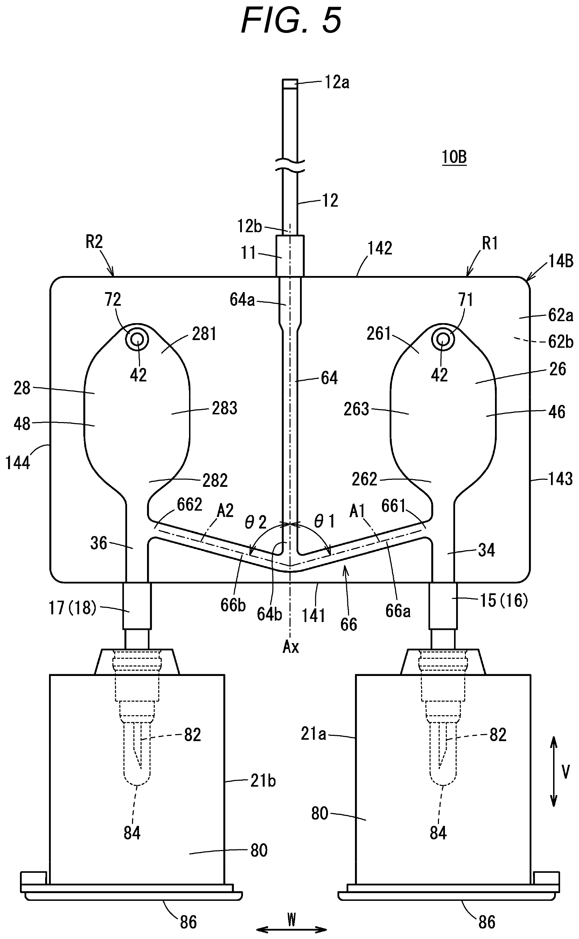

Next, a collection kit 10B according to a second embodiment will be described with reference to Figs. 5 to 7.

The collection kit 10B is typically used in a posture in which an up-down direction in Figs. 5 to 7 is in a vertical direction. Therefore, in the following description, in the collection kit 10B, the up-down direction in Figs. 5 to 7 is also referred to as the "up-down direction", and a right-left direction in Figs. 5 to 7 is also referred to as a "width direction".

The collection kit 10B according to the second embodiment is different from the collection kit 10A according to the first embodiment illustrated in Fig. 1 in a configuration of a collection bag 14B. As illustrated in Fig. 5, the collection bag 14B includes two flexible sheets 62a and 62b stacked in a thickness direction. A common channel 64, a plurality of housing chambers, a connection channel 66, and a plurality of outflow channels are formed between the two flexible sheets 62a and 62b. The plurality of housing chambers includes a first housing chamber 26 and a second housing chamber 28. The plurality of outflow channels includes a first outflow channel 34 and a second outflow channel 36. The collection bag 14B may include three or more housing chambers and three or more outflow channels.

In an initial state of the collection kit 10B, the common channel 64, the first housing chamber 26, the second housing chamber 28, the connection channel 66, the first outflow channel 34, and the second outflow channel 36 swell in the thickness direction of the collection bag 14B. Therefore, the two flexible sheets 62a and 62b are separated from each other in the thickness direction in each portion of the common channel 64, the first housing chamber 26, the second housing chamber 28, the connection channel 66, the first outflow channel 34, and the second outflow channel 36.

As seen in the thickness direction of the collection bag 14B, the collection bag 14B has a rectangular shape with a long side in the width direction and a short side in the up-down direction. Therefore, as illustrated in Fig. 5, the collection bag 14B has a lower side portion 141 and an upper side portion 142 extending in the width direction, and a right side portion 143 and a left side portion 144 extending in the up-down direction.

The configurations of the first housing chamber 26, the second housing chamber 28, the first outflow channel 34, and the second outflow channel 36 of the collection bag 14B are the same as the configurations of the first housing chamber 26, the second housing chamber 28, the first outflow channel 34, and the second outflow channel 36 of the collection bag 14A illustrated in Fig. 1.

As illustrated in Fig. 5, the common channel 64 includes an upstream end 64a and a downstream end 64b. The upstream end 64a of the common channel 64 is connected downstream of the inflow tube 12. The downstream end 64b of the common channel 64 is located in the vicinity of the lower side portion 141 of the collection bag 14B. The common channel 64 extends in the up-down direction from the upper side portion 142 toward the lower side portion 141 so as to divide the collection bag 14B into substantially half in the width direction. The common channel 64 divides the collection bag 14B into a first region R1 on one side in the width direction and a second region R2 on the other side in the width direction. The first housing chamber 26 and the first outflow channel 34 are located in the first region R1. The second housing chamber 28 and the second outflow channel 36 are located in the second region R2.

The connection channel 66 includes a first branch path 66a branching from the common channel 64 and communicating with the first housing chamber 26, and a second branch path 66b branching from the common channel 64 and communicating with the second housing chamber 28. The first branch path 66a and the second branch path 66b have a V-shape with a top portion facing downward (an upper portion opened). An intersection angle θ1 between an axis Ax of the common channel 64 and an axis A1 of the first branch path 66a is, for example, 10° to 85°. An intersection angle θ2 between the axis Ax of the common channel 64 and an axis A2 of the second branch path 66b is, for example, 10° to 85°, similarly.

The intersection angle θ1 and the intersection angle θ2 are preferably 45° to 85°, and more preferably 75° to 85°. The intersection angle θ1 and the intersection angle θ2 may be obtuse angles. In this case, the first branch path 66a and the second branch path 66b have a V-shape with a top portion facing upward (a lower portion opened). Note that, the intersection angle θ1 and the intersection angle θ2 may be different from each other. Note that, a channel length of the first branch path 66a and a channel length of the second branch path 66b may be different from each other.

A downstream end 661 of the first branch path 66a is connected to the first outflow channel 34. More specifically, the downstream end 661 of the first branch path 66a is connected between the center and an upper end in an extending direction of the first outflow channel 34 (a place close to the first housing chamber 26). The first housing chamber 26 communicates with the common channel 64 via the first outflow channel 34 and the first branch path 66a. Alternatively, the downstream end 661 of the first branch path 66a may be directly connected to the lower portion 262 of the first housing chamber 26 without being connected to the first outflow channel 34.

A downstream end 662 of the second branch path 66b is connected to the second outflow channel 36. More specifically, the downstream end 662 of the second branch path 66b is connected between the center and an upper end in an extending direction of the second outflow channel 36 (a place close to the second housing chamber 28). The second housing chamber 28 communicates with the common channel 64 via the second outflow channel 36 and the second branch path 66b. Alternatively, the downstream end 662 of the second branch path 66b may be directly connected to the lower portion 282 of the second housing chamber 28 without being connected to the second outflow channel 36.

The collection bag 14B further includes an exhaust unit 71 (hereinafter, also referred to as a "first exhaust unit 71") for discharging the air inside the first housing chamber 26 to the outside of the collection bag 14B, and an exhaust unit 72 (hereinafter, also referred to as a "second exhaust unit 72") for discharging the air inside the second housing chamber 28 to the outside of the collection bag 14B.

The first exhaust unit 71 is disposed in the wall portion 46 forming the first housing chamber 26. The wall portion 46 is a part of one flexible sheet 62a. The first exhaust unit 71 is disposed in the wall portion 46 forming the first upper portion 261 of the first housing chamber 26 out of the flexible sheet 62a. More specifically, the first exhaust unit 71 is disposed in the vicinity of an upper end of the first upper portion 261 (a position adjacent to the upper end of the first upper portion 261).

The second exhaust unit 72 is disposed in the wall portion 48 forming the second housing chamber 28. The wall portion 48 is a part of one flexible sheet 62a. The second exhaust unit 72 is disposed in the wall portion 48 forming the second upper portion 281 of the second housing chamber 28 out of the flexible sheet 62a. More specifically, the second exhaust unit 72 is disposed in the vicinity of an upper end of the second upper portion 281 (a position adjacent to the upper end of the second upper portion 281).

The configuration of each of the first exhaust unit 71 and the second exhaust unit 72 is the same as the configuration of the exhaust unit 40 illustrated in Fig. 2. Note that, in a case where the collection bag 14B illustrated in Fig. 5 includes three or more housing chambers, the exhaust units are arranged in the wall portions forming the respective housing chambers. That is, the exhaust units as many as the housing chambers are provided.

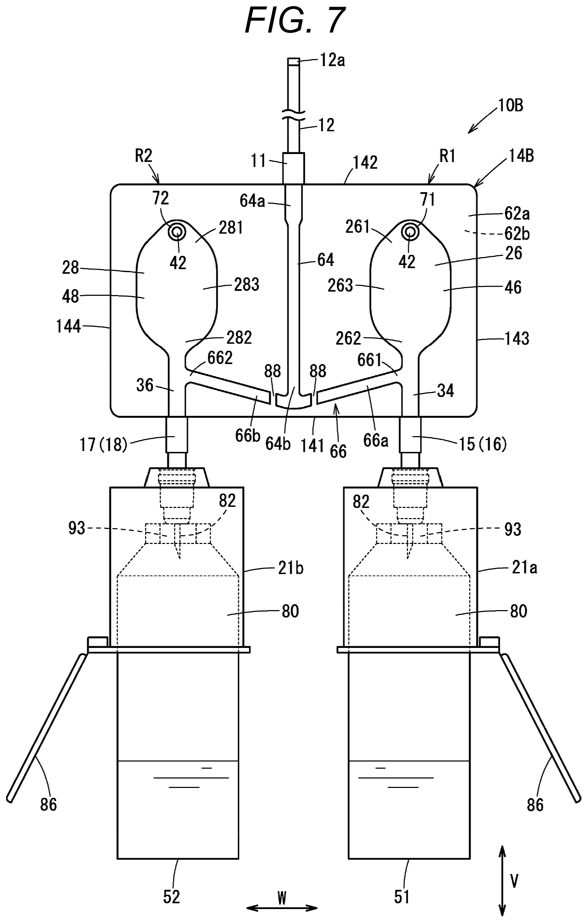

The collection kit 10B configured as described above is used as follows. In the second embodiment, a collection method of dispensing the platelet preparation into the two sampling containers 51 and 52 (refer to Fig. 7) using the collection kit 10B will be described taking a case where the collection target is the platelet preparation as an example.

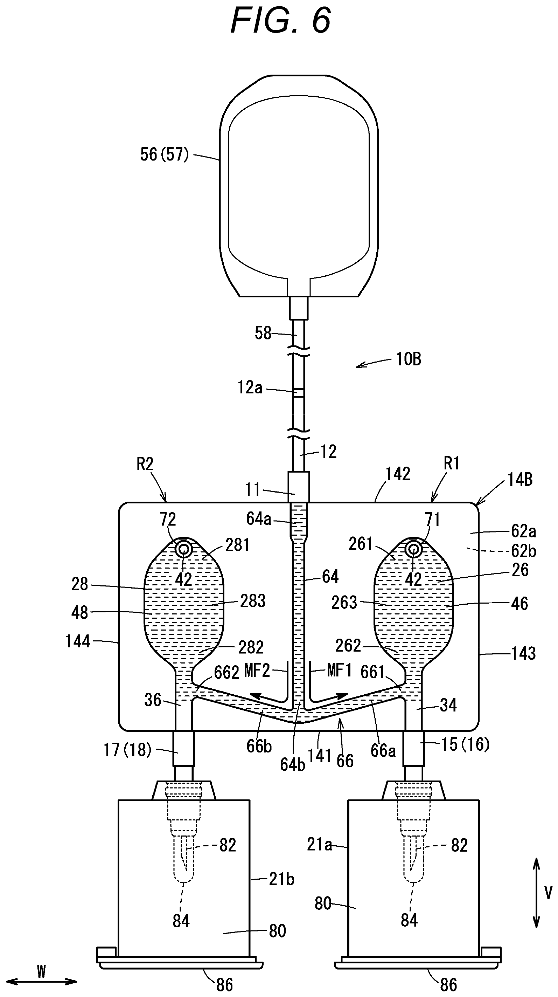

As illustrated in Fig. 6, the tube 58 of the platelet bag 57 is joined to the inflow tube 12 of the collection kit 10B. The tube 58 is joined to the inflow tube 12 without coming into contact with outside air using the aseptic joining device.

Next, the platelet preparation is introduced into the collection bag 14B. At this step, the platelet bag 57 is disposed above the collection bag 14B. The first sealing member 16 and the second sealing member 18 of the collection kit 10B are maintained in a closed state.

The platelet preparation flows out of the platelet bag 57 by gravity and flows into the common channel 64 via the inflow tube 12. The platelet preparation moves toward the lower side portion 141 of the collection bag 14B along the common channel 64 by gravity. The platelet preparation is divided into a first branch MF1 flowing from the common channel 64 into the first branch path 66a and a second branch MF2 flowing from the common channel 64 into the second branch path 66b.

The first branch path 66a is inclined upward as this separates from the common channel 64 and approaches the first housing chamber 26. Therefore, the first branch MF1 rises as this moves toward the first housing chamber 26 in the first branch path 66a. Air in the first branch path 66a is uniformly pushed by the rising first branch MF1 and moves toward the first housing chamber 26. Therefore, the air remaining in the first branch path 66a is reduced. Since the first sealing member 16 is closed at this time point, the first branch MF1 temporarily flows into the first outflow channel 34 and then flows into the first housing chamber 26. Therefore, at least a part of air in the first outflow channel 34 is pushed out by the first branch MF1 and moves to the first housing chamber 26. As a result, the air remaining in the first outflow channel 34 is reduced.

The first branch MF1 further flows into the first housing chamber 26, so that the liquid level of the platelet preparation rises in the first housing chamber 26. Accordingly, the air in the first housing chamber 26 is pushed up by the platelet preparation, and the air is discharged to the outside of the collection bag 14B via the first exhaust unit 71. When the first housing chamber 26 is filled with the platelet preparation and the filter 42 of the first exhaust unit 71 comes into contact with the platelet preparation to wet the filter 42, the first exhaust unit 71 is closed, and the inflow of the platelet preparation into the first housing chamber 26 is stopped.

In contrast, the second branch MF2 flowing into the second outflow channel 36 via the second branch path 66b is also housed in the second housing chamber 28 in the manner similar to that described above. That is, the platelet preparation of the second branch MF2 flows in the second branch path 66b toward the second housing chamber 28, and flows into the second housing chamber 28 via the second outflow channel 36. As the platelet preparation flows into the second housing chamber 28, the liquid level of the platelet preparation rises in the second housing chamber 28. With this rise in liquid level, the air in the second housing chamber 28 is pushed up by the platelet preparation, and the air is discharged to the outside of the collection bag 14B via the second exhaust unit 72. When the second housing chamber 28 is filled with the platelet preparation and the filter 42 of the second exhaust unit 72 comes into contact with the platelet preparation to wet the filter 42, the second exhaust unit 72 is closed, and the inflow of the platelet preparation into the second housing chamber 28 is stopped.

When the inflow of the platelet preparation into the first housing chamber 26 and the second housing chamber 28 is stopped, the introduction of the platelet preparation into the collection bag 14B is completed. A predetermined amount (for example, about 8 mL to 10 mL) of the platelet preparation is housed in each of the first housing chamber 26 and the second housing chamber 28.

Thereafter, the platelet bag 57 is separated from the inflow tube 12 by a tube sealer (high-frequency sealer or ultrasonic sealer) or the like. The separated platelet bag 57 is stored until a culture test is completed, and then used.

In contrast, the collection kit 10B filled with the platelet preparation is carried into a clean bench. Next, as illustrated in Fig. 7, an operation for transferring the platelet preparation from the collection kit 10B to the first sampling container 51 and the second sampling container 52 (connecting step, closing step, and opening step) is performed.

At the connecting step, the first sampling container 51 is connected to the first adapter 21a, and the second sampling container 52 is connected to the second adapter 21b. The needle portion 82 of the first adapter 21a penetrates the rubber stopper 93 of the first sampling container 51, and the needle portion 82 of the second adapter 21b penetrates the rubber stopper 93 of the second sampling container 52.

At the closing step, the closing step of blocking communication between the first housing chamber 26 and the second housing chamber 28 is performed. At the closing step, for example, as illustrated in Fig. 7, a welding seal portion 88 is formed in each of the first branch path 66a and the second branch path 66b in the collection bag 14B. The welding seal portion 88 can be formed by welding the two flexible sheets 62a and 62b by, for example, an ultrasonic sealer or a high-frequency sealer. In place of the welding seal portion 88, a plurality of clamps such as pinchcocks may be used to block communication between each of the first branch path 66a and the second branch path 66b and the common channel 64.

By this blocking, the first housing chamber 26 and the second housing chamber 28 become independent inner chambers. Therefore, the movement of the platelet preparation between the first housing chamber 26 and the second housing chamber 28 is blocked. Note that, either the connecting step or the closing step may be performed first.

Thereafter, when the opening operation of the first sealing member 16 is performed at the opening step, the platelet preparation in the first housing chamber 26 is sucked by a negative pressure of the first sampling container 51 and flows into the first sampling container 51 via the first outflow channel 34 and the first outflow port 15 (first sealing member 16). As a result, a predetermined amount of the platelet preparation is introduced into the first sampling container 51. When the opening operation of the second sealing member 18 is performed at the opening step, the platelet preparation in the second housing chamber 28 is sucked by a negative pressure of the second sampling container 52 and flows into the second sampling container 52 via the second outflow channel 36 and the second outflow port 17 (second sealing member 18). As a result, a predetermined amount of the platelet preparation is introduced into the second sampling container 52.

As a result, substantially the entire amount of the platelet preparation accumulated in the first housing chamber 26 is transferred to the first sampling container 51, and substantially the entire amount of the platelet preparation accumulated in the second housing chamber 28 is transferred to the second sampling container 52.

Through the above steps, the collection of the platelet preparation using the collection kit 10B is completed.

Note that, when collecting the platelet preparation using the collection kit 10B, a jig (collection kit jig) for connecting the collection kit 10B to the first sampling container 51 and the second sampling container 52 may be used.

The collection kit 10B according to the second embodiment has the following effects.

In the collection kit 10B, the collection target flows into the first housing chamber 26 and the second housing chamber 28 via the first branch path 66a and the second branch path 66b, respectively, and the air inside the first housing chamber 26 and the second housing chamber 28 is discharged from the first exhaust unit 71 and the second exhaust unit 72, respectively. Therefore, the air can be efficiently discharged from the inside of the first housing chamber 26 and the second housing chamber 28.

In the second embodiment, the same or similar functions and effects as those of the first embodiment can be obtained for a part common to the first embodiment.

Note that, the present invention is not limited to the above disclosure and can take various configurations without departing from the gist of the present invention.

## Claims

1. A collection kit for collecting a collection target housed in a medical bag into a plurality of sampling containers, the collection kit comprising:
an inflow tube to which the medical bag is connected; and
a collection bag connected downstream of the inflow tube, the collection bag formed by stacking and welding two flexible sheets,
the collection bag including:
a plurality of housing chambers that houses the collection target;
a connection channel that connects the plurality of housing chambers to each other;
an exhaust unit disposed in a wall portion forming at least one housing chamber out of the plurality of housing chambers for discharging air inside the plurality of housing chambers to an outside of the collection bag; and
a plurality of outflow ports connected to the plurality of housing chambers, respectively, that transfers the collection target from the plurality of housing chambers to the plurality of sampling containers, respectively.

2. The collection kit according to claim 1, wherein
the collection bag includes a first end to which the inflow tube is connected, and a second end opposite to the first end and provided with the plurality of outflow ports,
the collection kit is configured to be used in a posture in which the second end is below the first end, and
the exhaust unit is disposed in an upper portion of the wall portion.

3. The collection kit according to claim 1, wherein
the exhaust unit includes a hydrophilic filter.

4. The collection kit according to claim 1, comprising:
a plurality of adapters connected downstream of the plurality of outflow ports, and connectable to the plurality of sampling containers, respectively.

5. The collection kit according to any one of claims 1 to 4, wherein
the plurality of housing chambers includes a first housing chamber and a second housing chamber,
the collection bag includes an inflow channel that connects the inflow tube and the first housing chamber,
an upstream end of the connection channel is connected to the first housing chamber,
a downstream end of the connection channel is connected to the second housing chamber, and
the exhaust unit is provided in a wall portion forming the second housing chamber.

6. The collection kit according to any one of claims 1 to 4, wherein
the plurality of housing chambers includes a first housing chamber and a second housing chamber,
the collection bag includes a common channel connected downstream of the inflow tube,
the connection channel includes a first branch path branched from the common channel to communicate with the first housing chamber, and a second branch path branched from the common channel to communicate with the second housing chamber, and
the exhaust unit includes a first exhaust unit disposed in a wall portion forming the first housing chamber and a second exhaust unit disposed in a wall portion forming the second housing chamber.
